# EUROPÄISCHE PATENTSCHRIFT

(11) **EP 0 869 129 B1**
(45) Veröffentlichungstag und Bekanntmachung des Hinweises auf die Patenterteilung: **28.04.1999**
(21) Anmeldenummer: 98104986.9
(22) Anmeldetag: 19.03.1998
(51) Int. Cl.: C07F 7/12

(54) **Verfahren zur Herstellung von Alkylchlorsilanen aus den Rückständen der Direktsynthese von Alkylchlorsilanen**
Process for preparing alkylchlorosilanes from residue by direct process
Procédé de préparation de alkylchlorosilanes à partir du résidu obtenu par le procédé direct

(30) Priorität: 20.03.1997 DE 19711693
(43) Veröffentlichungstag der Anmeldung: 07.10.1998
(73) Patentinhaber: Wacker-Chemie GmbH, 81737 München (DE)
(72) Erfinder: Mautner, Konrad, Dr., 84489 Burghausen (DE); Schinabeck, Anton, 84489 Burghausen (DE); Straussberger, Herbert, 84561 Mehring (DE)
(74) Vertreter: Fritz, Helmut, Dr.

(56) Entgegenhaltungen:
- EP-A- 0 574 912
- US-A- 2 681 355
- US-A- 5 502 230

## Beschreibung

Die Erfindung betrifft ein kontinuierliches Verfahren zur Herstellung von Alkylchlorsilanen, bei dem die Rückstände aus der Direktsynthese von Alkylchlorsilanen mit Chlorwasserstoff thermisch gespalten werden.

Bei der Direktsynthese von Alkylchlorsilanen der allgemeinen Formel RₐH_{b}SiCl_{4-a-b}, in der a die Werte 1, 2 oder 3 und b die Werte 0, 1 oder 2 bedeuten, aus Siliciummetall und Alkylchloriden R-Cl, wobei R einen Alkylrest bedeutet, entstehen als Nebenprodukte Oligosilane, Carbosilane, Siloxane und hochsiedende Crackprodukte. Darüber hinaus finden sich im Destillationsrückstand Feststoffe aus der Direktsynthese, die als Feinstanteil auch durch Cyclone und Filter nicht zurückgehalten werden. Die Feststoffe bestehen aus Silicium, Metallchloriden, z.B. AlCl₃, Metallsiliciden und Ruß.

Den überwiegenden Teil dieser Rückstände machen die Oligosilane, besonders die Disilane der allgemeinen Formel R_{c}Cl_{6-c}Si₂, in der c die Werte 0 - 6, bedeutet, aus. Methylarme Disilane können mit Chlorwasserstoff in Anwesenheit stickstoffhaltiger Katalysatoren zu Monosilanen umgewandelt werden; dies ist z.B. beschrieben in der US-A-2,709,176. In der US-A-5,502,230 ist ein Verfahren zur Verwertung der methylreichen Disilane beschrieben, bei dem diese in Anwesenheit eines Katalysators, der aus Palladium (0) oder Platin (0) und einer speziellen organischen Stickstoff- oder Phosphorverbindung besteht mit HCl gespalten werden. Die unterschiedlichen Disilane können nur mit verschiedenartigen Katalysatoren gespalten werden. Darüber hinaus müssen die Disilane vorher von den festen Rückständen abgetrennt werden, da diese Rückstände, wie beispielsweise Aluminiumchlorid, als Katalysatorgifte wirken.

In der US-A-2,681,355, ist ein kontinuierliches Verfahren beschrieben, bei dem unkatalysiert und rein thermisch, höher als 70°C siedende Rückstände der Direktsynthese von Methylchlorsilanen im Leerrohr mit Chlorwasserstoff bei Temperaturen von 400 - 900°C unter Bildung von monomeren Silanen umgesetzt werden. Bei der Umsetzung feststoffhaltiger Rückstände wachsen die Reaktionsrohre zu.

Es bestand die Aufgabe, ein einfach durchzuführendes Verfahren bereitzustellen, das auch feststoffhaltige Rückstände der Direktsynthese von Alkylchlorsilanen bei geringen Drücken aufarbeiten und die siliciumorganischen Anteile in verwertbare Silane umwandeln kann.

Gegenstand der Erfindung ist ein kontinuierliches Verfahren zur Herstellung von Alkylchlorsilanen aus den Rückständen der Direktsynthese von Alkylchlorsilanen, welche flüssige Bestandteile mit einem Siedepunkt von mindestens 70°C bei 1013 hPa und Feststoffe aufweisen, durch Erhitzen der Rückstände mit Chlorwasserstoff bei Temperaturen von 300 bis 800°C in einem Rohrreaktor mit drehbaren Einbauten.

Durch die Drehbewegungen der Einbauten werden Anbackungen durch Verkokung oder aus den Feststoffanteilen an den Reaktorwänden abgeschert. Ein Zuwachsen des Reaktors wird dadurch verhindert. Dadurch kann das Verfahren über lange Zeit kontinuierlich betrieben werden.

Vorzugsweise werden Alkylchlorsilane der vorstehenden allgemeinen Formel hergestellt, in der **R** einen Methyl-, Ethyl-, Butyl- oder Propylrest, insbesondere einen Methylrest bedeutet.

Vorzugsweise weisen die Rückstände der Direktsynthese flüssige Bestandteile mit einem Siedepunkt von mindestens 80°C, insbesondere mindestens 100°C bei 1013 hPa auf.

Die Rückstände werden vorzugsweise zusammen mit Chlorwasserstoff in einen Rohrreaktor eingespeist. Die Vermischung kann vor oder erst im Reaktor geschehen. Eingesetzt wird mindestens die den im Rückstand enthaltenen Disilanen molar äquivalente Menge, jedoch nicht mehr als die 10-fache molare Menge. Bevorzugt eingesetzt wird die 1,1- bis 2-fache molare Menge. Der Rückstand und der Chlorwasserstoff können sowohl vorgeheizt, als auch bei Umgebungstemperatur in den Reaktor dosiert werden, wobei die Ströme bevorzugt kontinuierlich dosiert werden. Der Rückstand kann bei Beheizung auch als Gas-Flüssig-Gemisch dosiert werden.

Der rohrförmige Reaktor besteht aus einem Mantel, der direkt oder indirekt bis 800°C beheizbar ist. Zur Beheizung kommen hochtemperaturbeständige Wärmeträgeröle, elektrische Widerstandsbeheizung, Induktionsheizung oder Kombinationen davon in Frage. Der Reaktor wird von 300 bis 800°C, bevorzugt von 500 bis 650°C betrieben. Der Druck beträgt vorzugsweise 500 bis 10000 hPa, insbesondere 1000 bis 3000 hPa.

Eingebaut im Reaktor sind eine oder mehrere drehbare Elemente, die Rückstände und Krusten von der Reaktorwand abscheren. Bevorzugt sind starre Rotoren mit mindestens zwei Flügeln. Im einfachsten Fall ähnelt der Reaktor stark einem Dünnschichtverdampfer mit einem Rotor. Das Verhältnis Länge zu Durchmesser des Reaktors beträgt mindestens 0,5, bevorzugt mindestens 5. Der Reaktor kann waagerecht oder bevorzugt senkrecht betrieben werden.

Der Rückstand und der Chlorvasserstoff können im Gegenstrom oder Gleichstrom dosiert werden. Gegebenenfalls können für einen Strom mehrere Dosierstellen über die Reaktorlänge verteilt existieren.

Die Hitzebehandlung bringt als positiven Nebeneffekt eine Sinterung der Feststoffpartikel mit sich, dadurch lassen sich schwer filtrierbare, gegebenenfalls kolloidal verteilte Feststoffe in filtrierbare Anteile überführen.

Das aus dem Reaktor austretende Gemisch wird kondensiert, gegebenenfalls von Feststoffen befreit und kann dem bei der Direktsynthese erzeugten Alkylchlorsilangemisch wieder zugeführt werden oder auch separat in Reinsubstanzen aufgetrennt werden.

In den nachfolgenden Beispielen sind, falls jeweils nicht anders angegeben,
a) alle Mengenangaben auf das Gewicht bezogen;
b) alle Drücke 1013 hPa (Normaldruck);
c) alle Temperaturen 20°C .

### Beispiele

### Beispiel 1 (analog US-A-2,681,355; nicht erfindungsgemäß):

In ein leeres, waagerechtes Stahlrohr mit 700 mm Länge und 25 mm Innendurchmesser, das sich in einem Rohrofen befand, wurden 180 ml/h hochsiedender Rückstand der Silansynthese mit einem Siedepunkt > 150°C zusammen mit 25 l/h gasförmigem Chlorwasserstoff im Gleichstrom bei Raumtemperatur und Umgebungsdruck dosiert. Der Rohrofen war auf eine Temperatur von 550°C eingestellt. Der hochsiedende Rückstand bestand aus 80 % Disilanen (Mischung aus 1,1,2,2-Tetrachlordimethyldisilan, 1,1,2-Trichlortrimethyldisilan und 1,2-Dichlortetramethyldisilan, 2 % Festanteilen und 18 % Siloxane und Carbosilane. Eine exaktere Zuordnung ist aufgrund der Vielzahl von Nebenprodukten schwierig. Nach 17 Betriebsstunden wurde der Versuch abgebrochen, da der Rohrreaktor in der Reaktionszone durch Feststoff und Crackprodukte zugewachsen war.
Während des Versuchs resultierte ein Spaltsilan mit in Tabelle I aufgeführter Zusammensetzung:

**Tabelle I**

| Substanz | Anteil im Spaltsilan |
|---|---|
| | [Gew.-%] |
| Dimethylchlorsilan | 1 |
| Methyldichlorsilan | 10 |
| Trimethylchlorsilan | 2 |
| Methyltrichlorsilan | 35 |
| Dimethyldichlorsilan | 32 |
| Feststoffe | 3 |
| Sonstige | 17 |

### Beispiel 2 (erfindungsgemäß)

In einen senkrecht stehenden Reaktor (Länge 1000 mm, Durchmesser 100 mm) mit eingebautem, dreiflügligem, starren Rotor wurden im Gleichstrom von oben 1500 ml/h Silangemisch aus Beispiel 1 und 170 l/h gasförmiger Chlorwasserstoff bei Raumtemperatur und Umgebungsdruck dosiert. Der Reaktor wurde mittels eines Rohrofens auf 600°C beheizt. Auch nach 50 Betriebsstunden wurde auf der Reaktorinnenwand nur ein geringer Belag gefunden. Während des Versuchs resultierte ein Spaltsilan mit in Tabelle II aufgeführter Zusammensetzung:

**Tabelle II**

| Substanz | Anteil im Spaltsilan |
|---|---|
| | [Gew.-%] |
| Dimethylchlorsilan | 2 |
| Methyldichlorsilan | 10 |
| Trimethylchlorsilan | 1 |
| Methyltrichlorsilan | 32 |
| Dimethyldichlorsilan | 33 |
| Feststoffe | 3 |
| nicht gespaltene Disilane | 4 |
| Sonstige | 15 |

## Patentansprüche

1. Kontinuierliches Verfahren zur Herstellung von Alkylchlorsilanen aus den Rückständen der Direktsynthese von Alkylchlorsilanen, welche flüssige Bestandteile mit einem Siedepunkt von mindestens 70°C bei 1013 hPa und Feststoffe aufweisen, durch Erhitzen der Rückstände mit Chlorwasserstoff bei Temperaturen von 300 bis 800°C in einem Rohrreaktor mit drehbaren Einbauten.

2. Verfahren nach Anspruch 1, bei dem auf 500 bis 650°C erhitzt wird.

3. Verfahren nach Anspruch 1 oder 2, bei dem der Druck im Reaktor 1000 bis 3000 hPa beträgt.

## Claims

1. Continuous process for preparing alkylchlorosilanes from the residues of direct synthesis of alkylchlorosilanes, which have liquid constituents with a boiling point of at least 70°C at 1013 hPa and solids, by heating the residues with hydrogen chloride at temperatures of from 300 to 800°C in a tubular reactor with internals which can be rotated.

2. Process according to Claim 1 in which heating is carried out to temperatures of from 500 to 650°C.

3. Process according to Claim 1 or 2 in which the pressure in the reactor is from 1000 to 3000 hPa.

## Revendications

1. Procédé continu de préparation d'alkylchlorosilanes à partir des résidus de la synthèse directe d'alkylchlorosilanes, lesquels présentent des constituants liquides ayant un point d'ébullition d'au moins 70°C à 1 013 hPa et des matières solides, en chauffant les résidus avec de l'acide chlorhydrique à des températures de 300 à 800°C dans un réacteur tubulaire ayant des éléments internes rotatifs.

2. Procédé selon la revendication 1, dans lequel on procède à un chauffage entre 500 et 600°C.

3. Procédé selon la revendication 1 ou 2, dans lequel la pression dans le réacteur est de 1 000 à 3 000 hPa.
